# EUROPEAN PATENT APPLICATION

(11) **EP 4 840 613 A1**
(43) Date of publication of application: **18.11.2026**
(21) Application number: 25175843.9
(22) Date of filing: 12.05.2025
(51) Int. Cl.: B29C 49/64, B29C 49/06, B29C 49/36, B29C 49/46, B29L 31/00

(54) **HYBRID PREFORM HEATING MACHINE WITH LASER UNIT**

(71) Applicant: SIDEL PARTICIPATIONS, 76930 Octeville-sur-Mer (FR)
(72) Inventor: CHOMEL, Nicolas, 76930 OCTEVILLE-SUR-MER (FR); LE PECHOUR, Anthony, 76930 OCTEVILLE-SUR-MER (FR)
(74) Representative: Sidel Group

(57) **Abstract**

It is described a heating machine (1; 1') for heating preforms (P) configured for forming containers (B), the containers (B) being configured for containing pourable products, comprising: a no laser heating unit (11) for heating the preforms (P), the no laser heating unit (11) being not configured for heating the preforms by laser; a laser heating unit (12) for heating by means of laser the preforms (P) having been heated by the no laser unit (11).

## Description

### TECHNICAL FIELD

The present invention to a heating machine for heating preforms within a container manufacturing apparatus for manufacturing containers starting from preforms, wherein the heating machine is configured for increasing the operational efficiency of the apparatus.

### BACKGROUND ART

In the field of packaging of pourable products by means of containers, it is known to form the containers starting from preforms, for example in case the containers are plastic bottles. It is known to use a forming machine for forming the plastic bottles from the preforms. It is also known to use a heating machine for properly heating the preforms before the preforms are formed into bottles.

In the field of packaging of pourable products by means of containers, the pourable food products may be carbonated liquids (such as sparkling water, soft drinks and beer), non-carbonated liquids (such as natural water, fruit juices, wine, tea, milk, flavored water), emulsions, suspensions, high viscosity liquids and drinks containing pulp and/or solid pieces. These pourable products can in turn be subdivided into "low acid" products and "high acid" products based on their pH value.

Low acid products are products, which have a pH value which is bigger than 4.6 and comprise typically pasteurized milk, UHT milk, water, tea, tea milk or coffee milk. These products are particularly sensitive products, since their pH is in a range favorable for the proliferation of microorganisms.

While high acid products are products which have a pH value which is lower than 4.6 and comprise typically drinking yogurt, probiotics, juice, isotonics, flavored water, ice tea or juice.

Therefore, there may be a variation of the packaging technique depending on the pH of the pourable product, on the required shelf life, on the type of distribution of the packaged product. The specific packaging technique is selected to reduce or even eliminate the presence of microorganism into the packaged product, so as to improve its shelf life. The microorganism could be bacteria (which could be present in vegetative or spore form; the latter being very resistant to thermal treatments), molds or yeasts.

Each technique may involve a specific treatment on the container and/or a specific treatment on the product.

A first technique is the aseptic packaging, according to which the container and the product are separately sterilized, before introduction of the product in the container, which introduction occurs in an aseptic environment. The first technique is applied typically for low acid products like UHT milk, tea milk, coffee milk or tea and contemplate to sterilize the bottle or the precursor of the bottle, for example the preform, with a sterilization agent.

A second technique, applied typically to pourable high acid products that can be subjected to prolonged treatments without any organoleptic alterations of the pourable product itself (like isotonics, flavored water, juice or ice tea), is the hot filling packaging, which requires to fill the container with the pourable product with the pourable product being heated at a pasteurization temperature (so called "hot fill" method). In this way by pouring the heated product into the bottle also the bottle will be pasteurized.

If a normal or regular packaging technique is employed, for increasing the shelf life of low acid products (like tea) or high acid products (like isotonics, flavored water, ice tea or juice), the use of preservatives is necessary.

It is known, for heating the preforms, to use heating machine working by means of halogen lamps, radio frequency heating, or high frequency heating. Current heating machines present a limited efficiency.

### DISCLOSURE OF INVENTION

A heating machine according to any of the appended machine claims or according to present description is configured for heating the preforms in an apparatus for forming containers from preforms, with an improved efficiency with respect to current heating machines.

A manufacturing apparatus according to present description or according to any of the appended apparatus claims comprises a heating machine according to present description or according to any of the appended machine claims.

The following brief description of the drawings and detailed description of the invention will be referred to a possible respective example embodiment of a heating machine according to present description, and a possible example embodiment of a manufacturing apparatus according to present description.

### BRIEF DESCRIPTION OF THE DRAWINGS

The following detailed description will be referred to the accompanying drawings, in which:
Figure 1 is a schematic view of the manufacturing apparatus comprising a first variant of the heating machine;
Figure 2 is a schematic view of the manufacturing apparatus comprising a second variant of the heating machine;

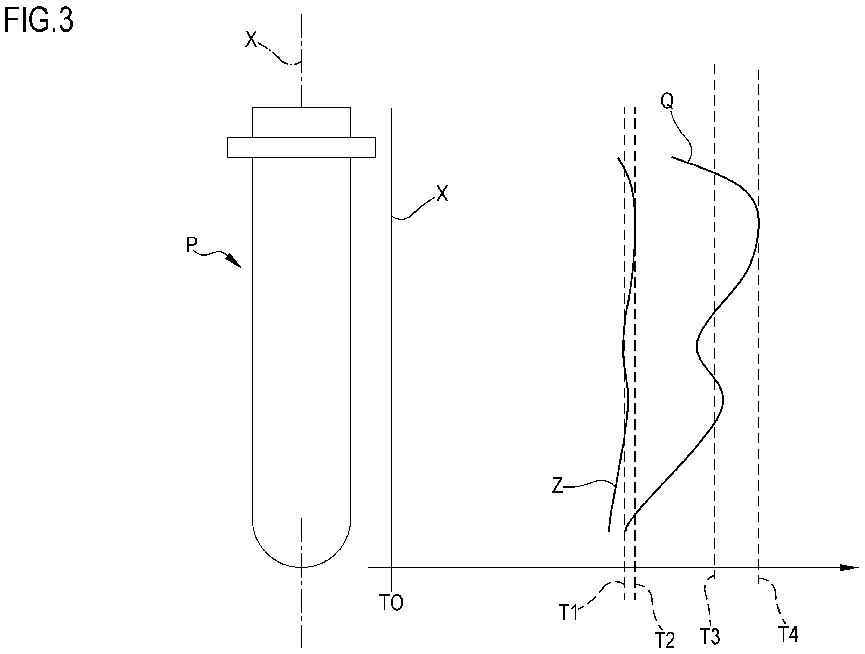

Figure 3 is a schematic explanation of the respective output temperature profiles which are obtained by means of different heating units which are part of the heating machine.

### DETAILED DESCRIPTION OF THE INVENTION

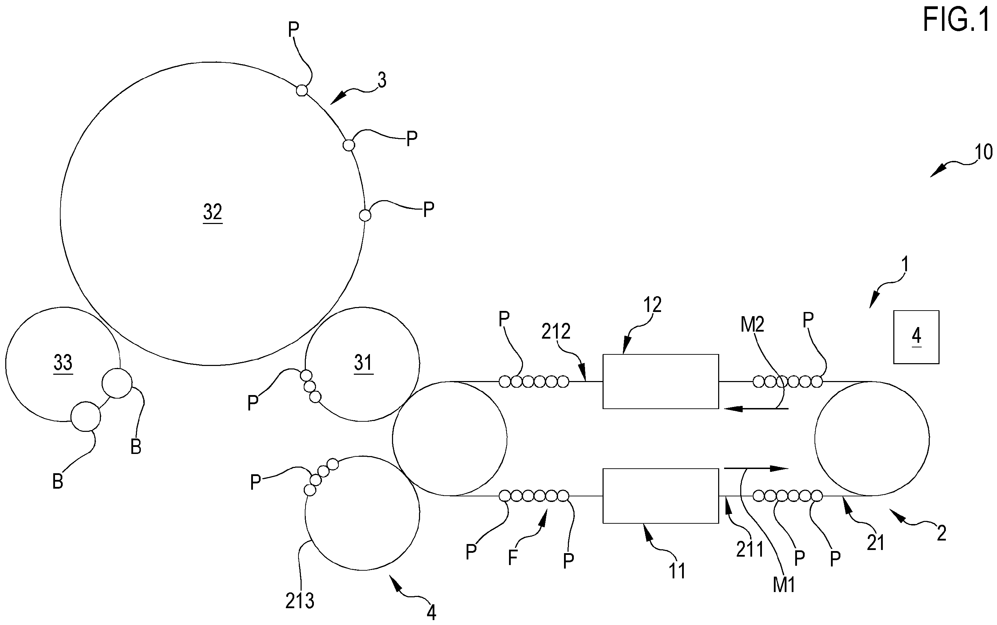

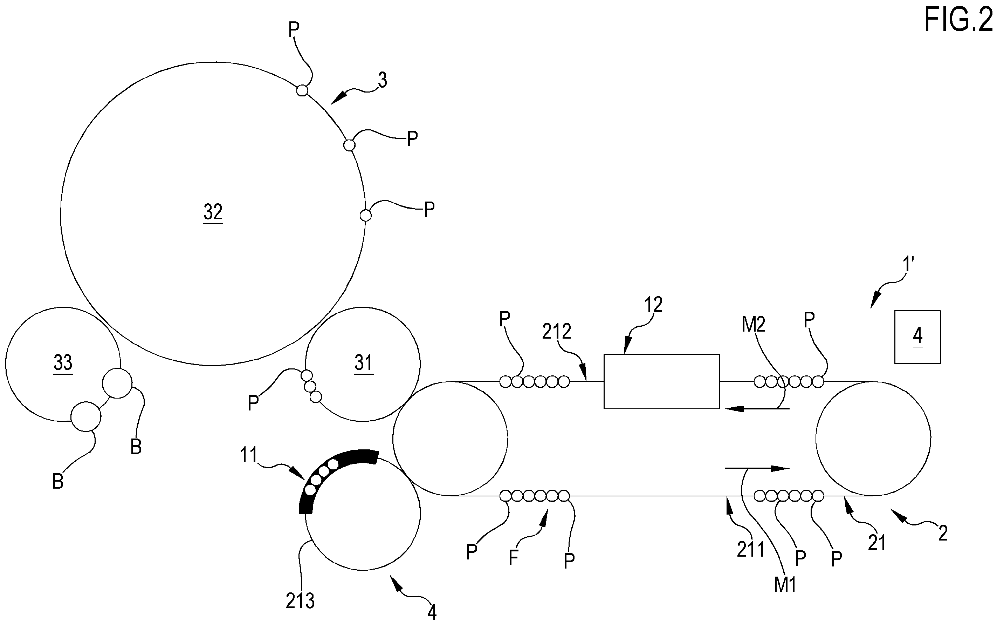

The manufacturing apparatus 10 is configured for producing containers B for containing pourable products, for example for producing plastic bottles. The manufacturing apparatus 10 comprises a heating machine for heating the preforms P. A first variant of the heating machine is indicated with 1 in Figure 1. A second variant of the heating machine is indicated with 1' in Figure 2. The apparatus 10 comprises a forming machine 3 for forming the containers B starting from preforms having heated by the heating machine 1. The forming machine 3 is for example a blowing machine which is configured for forming the containers B from the preforms P by means of a blow molding process. The forming machine 3 is for example preferably a rotative blow molding machine comprising a blowing carousel 32. The blow molding machine 3 comprises an input starwheel 31 for transferring the heated preforms P from the heating machine 1 to the blowing carousel 32. The blowing machine 3 comprises an output starwheel 33 for outputting the formed containers B from the blowing carousel 32.

The preforms P are plastic preforms so that the containers B are plastic containers.

The pourable product can be a carbonated liquid such as sparkling water, a soft drink, or beer. The pourable product may be a non-carbonated liquid like for example still water, a juice, tea, a sports drink, wine, or milk. The pourable product may be an emulsion, a sauce, or a beverage containing a pulp. The pourable product may be a product for home or personal care. The pourable product may be a high acid food product or a low acid food product.

The heating machine is for heating the preforms P. The heating machine comprises a no laser heating unit 11 for heating the preforms P. The no laser heating unit 11 is not configured for heating the preforms by laser. The heating machine comprises a laser heating unit 12, for heating by means of laser the preforms P having been heated by the no laser heating unit 11.

In Figure 1 preform P is represented, with the longitudinal axis X of the preform P. The longitudinal axis X extends from the bottom to the mouth of the preform P.

The no laser unit 11 is configured for generating a first temperature profile Z of the preform P as a function of the longitudinal extension X of the preform P. In Figure 1, an example of a first temperature profile is indicated with Z. The laser unit 12 is configured for generating a second temperature profile Q of the preform P as a function of the longitudinal extension X of the preform P. In Figure 1, an example of a second temperature profile is indicated with Q.

The starting temperature of the preform P is indicated by T0. The average temperature of the first profile Z is indicated with T1. The average temperature of the second profile Q is indicated with T3. The maximum temperature of the first profile Z is indicated with T2. The maximum temperature of the second profile Q is indicated with T4.

The temperature zoning is a feature related to the temperature profile of the preform P as a function of the longitudinal extension X. The temperature zoning corresponds to the granularity of the variation of the temperature with respect to the variation of the height along the longitudinal extension X. As it can be seen on the second profile Q, the final temperature zoning can be significant, thanks to the laser unit 12. Also the accuracy in targeting the desired temperature can be very high thanks to the laser unit 12. Instead, the no laser unit 11 can perform a part of the heating generating a first temperature profile Z with less variation than the second profile Q. In this way, the global efficiency can be high, thanks to the no laser unit 11, while the accuracy of the heating machine 1 is also optimized thanks to the laser unit 12. Consequently operational efficiency and production quality of the preform heating machine are optimized.

The heating machine 1 comprises an automatic control system 4 which is configured for automatically controlling the first temperature profile Z and the second temperature profile Q.

The automatic control system 4 is configured so that the standard deviation of the second profile Q is higher than the standard deviation of the first profile Z. In this way, the laser unit 12 implements a bigger part of the variable portion of the final profile, which is the second profile Q.

The first profile Z can be constant, differently from what is shown in Figure 1. In this case, the temperature of the first temperature profile would be constant along the longitudinal extension X.

The control system 4 is configured so that the average temperature T1 of the first temperature profile Z is bigger or equal than one half of the average temperature T3 of the second profile Q. For example, the control system 4 is configured so that the average temperature T1 of the first temperature profile Z is bigger or equal than two thirds of the average temperature T3 of the second profile Q. In this way, the efficiency of the heating machine 10 is enhanced.

The control system 4 is configured so that the maximum temperature T2 of the first temperature profile Z is lower than the maximum temperature T4 of the second profile Q. In this way the laser unit 12 performs a second part of the heating, which corresponds of a finalization of the heating process, while the no laser unit 11 performs a pre heating of the preform, which corresponds to a first part of the heating process.

The starting temperature T0 of the preforms P is for example 20 degree Celsius. The average temperature T1 of the first profile Z can be for example 75 degree Celsius. The average temperature T3 of the second profile Q can be for example 100 degree Celsius. The maximum temperature T2 of the first profile Z can be for example 78 degree Celsius. The maximum temperature T4 of the second profile Q can be for example 130 degree Celsius.

The heating machine 1 or 1' comprises a first conveying device 2 for conveying a flow F of preforms P along a conveying path 21. The conveying path 21 comprises a first section 211, and a second section 212. The second section 212 is positioned downstream of the first section 211 with respect to said flow F.

The first conveying device 2 comprises for example a conveyor chain provided with holders for supporting respective preforms P being conveyed.

The first section 211 and the second section 212 are positioned laterally to each other so that the direction of movement M1 of the flow F along the first section 211 is opposite to the direction M2 along the second section 212.

In the first variant 1, to which Figure 1 refers, the no laser heating unit 11 operates along the first section 211 and the laser heating unit 12 operates along the second section 212. By having the no laser heating unit 11 operating along the first section 211, and the laser heating unit 12 along the second section 212, there is an efficient use of the first section 211 for positioning the no laser unit 11, and therefore of the available space. In particular, using a no laser heating unit 11 for performing the first part of the heating allows to dispense with the need to reduce the risk of losing the thermal effect of the same first part of the heating. Therefore, there is no high need of keeping the first heating unit 11 corresponding to the no laser heating unit 11 too much close to the second heating unit corresponding to the laser heating unit 12. In this way, the first section 211 can be used for positioning the no laser heating unit 11, while the second section 212 is used for positioning the laser heating unit 12. Therefore the compactness of the heating machine 1 is enhanced.

In the first variant 1, the no laser heating unit 11 is a microwave heating unit for heating the preforms P by microwave. The microwave heating unit can be very effective for activating a sterilization agent which has been used for sterilizing at least the internal side of the preform P upstream the heating machine 1. Therefore, a heating machine 1 is provided which has an improved capability of operating in accordance with the aseptic packaging technique.

The heating machine comprises a second conveying device 4 which is configured for inputting the flow F of preforms P in the first conveying device 2. The second conveying device 4 defines an upstream stretch 213 of the conveying path 21. The upstream stretch 213 is positioned upstream of the first section 211 and upstream of the second section 212 with respect to said flow F.

The second conveying device 4 is rotative and is configured for conveying the preforms P by supportingthe respective necks of the preforms P, for example by gripping the respective necks of the preforms P.

In the second variant 1', the no laser heating unit 11 operates along the upstream stretch 213.

Having the no laser heating unit 11 operating along a stretch defined by a conveying device 4 which is supporting or gripping the preform P by the neck allows a more simple use of a no laser heating unit in the form of a radio frequency heating unit or in the form of a high frequency heating unit. In fact, in this case, an anode and a cathode will need to be used, and their positioning is more simple along a stretch 213 defined by such a conveying device 4 which support the preform P by the neck.

Therefore, in the second variant 1', the no laser heating unit 11 is a high frequency HF for heating the preforms P by high frequency heating, or a radio frequency heating unit for heating the preforms by radio frequency heating.

The laser heating unit 12 can be a laser oven.

The apparatus 10 is in particular configured for operating within an aseptic packaging line for the aseptic packaging of pourable products. In particular, in this case the heating machine 1 or 1' and the forming machine 3 operate in an aseptic environment.

The apparatus can anyway be used also in such a way that the standard deviation of the second profile Q is lower than the standard deviation of the first profile Z.

## Claims

1. Heating machine (1; 1') for heating preforms (P) configured for forming containers (B), the containers (B) being configured for containing pourable products, comprising:
a no laser heating unit (11) for heating the preforms (P), the no laser heating unit (11) being not configured for heating the preforms by laser;
a laser heating unit (12) for heating by means of laser the preforms (P) having been heated by the no laser heating unit (11).

2. Heating machine (1; 1') according to Claim 1, comprising a first conveying device (2) for conveying a flow (F) of preforms (P) along a conveying path (21) which comprises a first section (211) and a second section (212), the second section (212) being positioned downstream of the first section (211) with respect to said flow (F).

3. Heating machine (1; 1') according to Claim 2,
wherein:
the first section (211) and the second section (212) are positioned laterally to each other so that the direction of movement (M1) of the flow (F) along the first section (211) is opposite to the direction (M2) along the second section (212).

4. Heating machine (1) according to Claim 3, wherein the no laser heating unit (11) operates along the first section (211) and the laser heating unit (12) operates along the second section (212).

5. Heating machine (1') according to Claim 2 or 3, comprising a second conveying device (4) which is configured for inputting the flow (F) of preforms (P) in the first conveying device (2), the second conveying device (4) defining an upstream stretch (213) of the conveying path (21), which is positioned upstream of said first section (211) and upstream of said second section (212) with respect to said flow (F), wherein:
the second conveying device (4) is rotative and is configured for conveying the preforms (P) by supporting the respective necks of the preforms (P), for example by gripping or contacting the respective necks of the preforms (P);
the no laser heating unit (11) operates on said upstream stretch (213) while the laser heating unit (12) operates along the first section (211) or along the second section (212).

6. Heating machine (1; 1') according to any one or more of the previous Claims, wherein the no laser heating unit (11) is a high frequency (HF) heating unit for heating the preforms (P) by high frequency, or a radio frequency heating unit for heating the preforms by radio frequency, or a microwave heating unit for heating the preforms (P) by microwave.

7. Heating machine (1) according to Claim 4, wherein the no laser heating unit (11) is a microwave heating unit for heating the preforms (P) by microwave.

8. Heating machine (1') according to Claim 5, wherein the no laser heating unit (11) is a high frequency (HF) heating unit for heating the preforms (P) by high frequency, or a radio frequency (RF) heating unit for heating the preforms by radio frequency.

9. Heating machine (1; 1') according to any one or more of the previous Claims, wherein.
the first unit (11) is configured for generating a first temperature profile (Z) of the preform (P) as a function of the longitudinal extension (X) of the preform (P);
the laser unit (12) is configured for generating a second temperature profile (Q) of the preform (P) as a function of the longitudinal extension (X) of the preform (P);
the heating machine (1) comprises an automatic control system (4) which is configured for automatically controlling said temperature profiles (Z, Q).

10. Heating machine (1; 1') according to Claim 9, wherein the automatic control system (4) is configured so that the standard deviation of the second profile (Q) is higher than the standard deviation of the first profile (Z).

11. Heating machine (1; 1') according to Claim 9 or 10, wherein the control system (4) is configured so that the average temperature (T1) of the first temperature profile (Z) is bigger or equal than one half of the average temperature (T3) of the second profile (Q), or is bigger or equal than two thirds of the average temperature (T3) of the second temperature profile (Q).

12. Heating machine (1; 1') according to any one or more of Claims from 9 to 11, wherein the control system (4) is configured so that the maximum temperature (T2) of the first temperature profile (Z) is lower than the maximum temperature (T4) of the second profile (Q).

13. Manufacturing apparatus (10) for producing containers (B) from preforms (P), comprising a heating machine (1; 1') according to any one or more of the previous Claims and a forming machine (3) for forming the containers (B) starting from preforms having heated by the heating machine (1; 1'), by means of a blow molding process, the forming machine (3) being preferably a rotative blow molding machine comprising a blowing carousel (32), an input starwheel (31) for transferring the heated preforms (P) from the heating machine (1) to the blowing carousel (32), and an output starwheel (33) for outputting the formed containers (B) from the blowing carousel (32).

14. Manufacturing apparatus (10) according to Claim 13, wherein:
the preforms (P) are plastic preforms so that the containers (B) are plastic containers, and for example the containers (B) are plastic bottles;
the pourable product is:
a carbonated liquid such as sparkling water, a soft drink, or beer;
a non-carbonated liquid like for example still water, a juice, tea, a sports drink, wine, or milk;
an emulsion, a sauce, or a beverage containing a pulp; or
a product for home or personal care;
wherein the pourable product may be a high acid food product or a low acid food product.

15. Manufacturing apparatus (10) according to Claim 13 or 14, configured for operating within an aseptic packaging line for the aseptic packaging of pourable product, in particular so that the heating machine (1; 1') and the forming machine (3) operate in an aseptic and/or sterile environment.
